(19) **Europäisches Patentamt**

**European Patent Office**

**Office européen des brevets**

(11) **EP 3 312 021 B1**

(12) **FASCICULE DE BREVET EUROPEEN**

| | |
|---|---|
| (45) Date de publication et mention de la délivrance du brevet: **25.12.2019 Bulletin 2019/52** | (51) Int Cl.: **B60B 1/02** (2006.01)    **B60B 1/00** (2006.01) |

(21) Numéro de dépôt: **17194765.8**

(22) Date de dépôt: **04.10.2017**

(54) **RAYON POUR ROUE DE CYCLE**

SPEICHE FÜR FAHRRADRAD

SPOKE FOR CYCLE WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2016 FR 1601498**

(43) Date de publication de la demande:
**25.04.2018 Bulletin 2018/17**

(73) Titulaire: **MAVIC S.A.S.**
**74370 Epagny Metz-Tessy (FR)**

(72) Inventeurs:
• **MERCAT, Jean-Pierre**
**74650 Chavanod (FR)**
• **CRETOUX, Brieuc**
**74600 Seynod (FR)**
• **HUAT, François Xavier**
**74000 Annecy (FR)**

(74) Mandataire: **Rambaud, Pascal**
**Salomon S.A.S.**
**D.J.P.I.**
**74996 Annecy Cedex 9 (FR)**

(56) Documents cités:
**EP-A1- 1 559 583       EP-A1- 1 892 120**
**WO-A1-2011/137665     FR-A1- 2 912 345**
**FR-A1- 2 929 882**

**Description**

La présente invention concerne un rayon pour roue de cycle, ainsi qu'un procédé de fabrication d'un tel rayon.

De manière classique, un rayon pour roue de cycle comprend une partie centrale dont les extrémités sont munies d'embouts de fixation leur permettant d'être assemblées à la jante et au moyeu de la roue.

DE-U-296 08 495 divulgue une roue de cycle comprenant des rayons réalisés à partir d'un matériau composite. Les rayons ont une section transversale ovale, avec un rapport entre la longueur et la largeur de la section transversale du rayon égal à 4. Les matériaux composites sont coûteux et difficiles à industrialiser. Par ailleurs, la résistance mécanique intrinsèque des matériaux composites est plus faible que celle des alliages métalliques couramment utilisés pour fabriquer des rayons, tels que l'acier inoxydable ou les alliages d'aluminium. Par conséquent, l'aire de la section transversale des rayons est relativement importante pour assurer leur solidité, ce qui est nuisible à l'aérodynamisme de la roue.

FR-B-2 747 749 divulgue un rayon de roue de cycle dont la partie centrale est étirée et amincie par laminage, avant d'être aplatie par matriçage. Le matriçage consiste à introduire une pièce métallique chauffée dans un espace creux défini entre une demi-matrice supérieure et une demi-matrice inférieure. Une opération de forge consistant à frapper sur la demi-matrice supérieure est ensuite réalisée. Dans le cas où la pièce métallique est fabriquée à partir d'un matériau relativement dur, tel que l'acier inoxydable, la frappe réalisée lors du matriçage ne permet pas d'obtenir un rayon dont la section a une forme elliptique satisfaisante en ce qui concerne la résistance aérodynamique car, au niveau du plan de joint, c'est à dire entre les demi-matrices, le rayon a nécessairement une épaisseur minimale relativement élevée compte tenu de la faible ductilité de l'acier inoxydable. Ainsi, les bords d'attaque et les bords de fuite des rayons réalisés par matriçage n'ont pas un aérodynamisme satisfaisant.

EP-A-1 559 583 divulgue également un rayon de roue de cycle réalisé par laminage et matriçage. Le rayon est réalisé par exemple à partir d'un alliage d'aluminium. De la même manière que pour FR-B-2 747 749, cette technique de fabrication ne permet pas d'obtenir un bon aérodynamisme pour les bords d'attaque et des bords de fuite.

WO-A-03/018331 décrit un rayon aérodynamique comportant une âme métallique de section constante sur laquelle est pressée une enveloppe composite. Une telle conception rend le rayon relativement lourd et coûteux à fabriquer. De plus, un tel rayon est difficilement recyclable.

C'est à ces inconvénients qu'entend plus particulièrement remédier l'invention en proposant un rayon aérodynamique de conception simple et peu coûteuse qui soit plus léger. Un autre but de l'invention est de proposer un rayon recyclable.

A cet effet, l'invention a pour objet un rayon métallique pour roue de cycle comprenant une partie centrale située entre deux embouts de fixation, une section transversale de la partie centrale ayant une forme sensiblement elliptique dont la longueur maximale A, mesurée selon une première direction du plan transversal longitudinal entre le bord de fuite et le bord d'attaque du rayon, est strictement supérieure à une largeur maximale B de la section transversale de la partie centrale, mesurée selon une deuxième direction du plan transversal qui est perpendiculaire à la première direction, et caractérisée en ce qu'une section transversale de la partie centrale présente une aire (superficie) inférieure à 78% du produit de la longueur A par la largeur B.

A cet effet, l'invention a également pour objet un rayon métallique pour roue de cycle, comprenant une partie centrale située entre deux embouts de fixation, une section transversale de la partie centrale ayant une forme sensiblement elliptique dont la longueur maximale A, mesurée selon une première direction du plan transversal longitudinal entre le bord de fuite et le bord d'attaque du rayon, est strictement supérieure à une largeur maximale B de la section transversale de la partie centrale, mesurée selon une deuxième direction du plan transversal qui est perpendiculaire à la première direction, caractérisé en ce qu'une largeur intermédiaire de la section transversale de la partie centrale, mesurée selon la deuxième direction dans un plan intermédiaire parallèle au deuxième plan et situé du côté du bord de fuite ou du bord d'attaque par rapport au deuxième plan, est égale à 0.50 mm et en ce qu'une distance mesurée respectivement entre le bord de fuite ou le bord d'attaque et ledit plan intermédiaire, où la largeur intermédiaire est égale à 0,5 mm, est supérieure ou égale à 7% de la longueur maximale de la section transversale.

Grâce à l'invention, la forme effilée du bord d'attaque et/ou du bord de fuite améliore l'aérodynamisme du rayon.

Selon des aspects avantageux mais non obligatoires de l'invention, un tel rayon peut incorporer une ou plusieurs des caractéristiques suivantes, prises dans toute combinaison techniquement admissible :

- La distance mesurée entre le plan intermédiaire et le bord de fuite ou d'attaque est supérieure ou égale à 10% de la longueur maximale de la section transversale.
- La largeur maximale de la section transversale de la partie centrale du rayon est inférieure à 1.5 mm, de préférence inférieure à 1.2 mm, de préférence encore inférieure à 1 mm.
- Un rapport ayant, comme dénominateur, la largeur maximale et, comme numérateur, la longueur maximale, est supérieur ou égal à 3, de préférence supérieur ou égal à 4.
- Le module d'Young du matériau métallique constituant le rayon est supérieur à 100 GPa.

- La résistance à la traction du matériau métallique constituant le rayon est supérieure à 800 MPa.
- La densité ou masse volumique du matériau métallique constituant le rayon est supérieure à 4, de préférence supérieure à 7.
- La superficie de la section transversale de la partie centrale est inférieure à 75% du produit A x B.
- Une longueur de la partie centrale est supérieure ou égale à 60% d'une longueur totale du rayon.

Un autre aspect de l'invention concerne un procédé de fabrication d'un tel rayon, comprenant des étapes dans lesquelles :

- on réalise, à partir d'un fil métallique, une ébauche de rayon de section transversale sensiblement elliptique au moyen d'un procédé par déformation plastique,
- puis, la géométrie finale de la section transversale de la partie centrale du rayon est obtenue au moyen d'un procédé par enlèvement de matière.

Avantageusement, le procédé par déformation plastique consiste en du matriçage et/ou du laminage.

Avantageusement, le procédé par enlèvement de matière est le brochage externe.

De manière alternative, dans un autre mode de réalisation d'un procédé de fabrication selon l'invention, la géométrie finale de la section transversale est obtenue par une deuxième étape de déformation plastique.

L'invention sera mieux comprise et d'autres avantages de celle-ci apparaitront plus clairement à la lumière de la description qui va suivre d'une roue de cycle et de son procédé de fabrication conformes à l'invention, donnée uniquement à titre d'exemple et faite en référence aux dessins annexés dans lesquels :

- la figure 1 est une vue en perspective d'une roue de cycle conforme à l'invention :
- la figure 2 est une vue en perspective d'un rayon de la roue de la figure 1 ;
- la figure 3 est une coupe transversale selon le plan PIII à la figure 2 ;
- la figure 4 est une vue analogue à la figure 3 d'une ébauche de rayon en cours de fabrication ; et
- la figure 5 est une vue schématique du procédé de fabrication du rayon.

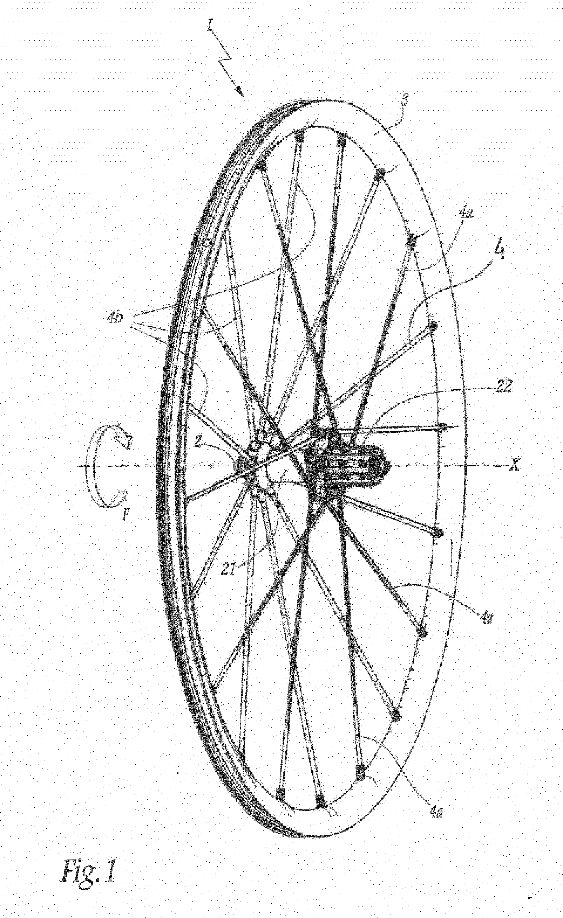

La figure 1 montre une roue arrière 1 de bicyclette, représentée sans son pneumatique. La roue 1 comprend deux nappes 4a et 4b de rayons 4 montés sur une jante 3. Les rayons 4 de la nappe 4a sont assemblés à un moyeu 2 de la roue 1. Le moyeu 2 comprend un corps de moyeu 21 s'étendant le long d'un axe de rotation X de la roue 1. Un mécanisme de roue libre 22 est raccordé à une première extrémité du corps de moyeu 21. L'autre extrémité du corps de moyeu 21 supporte les rayons 4 de la nappe 4b. Le mécanisme de roue libre 22 est prévu pour être assemblé avec une cassette de pignons, non représentée.

L'invention s'applique également et surtout aux roues avant de bicyclette.

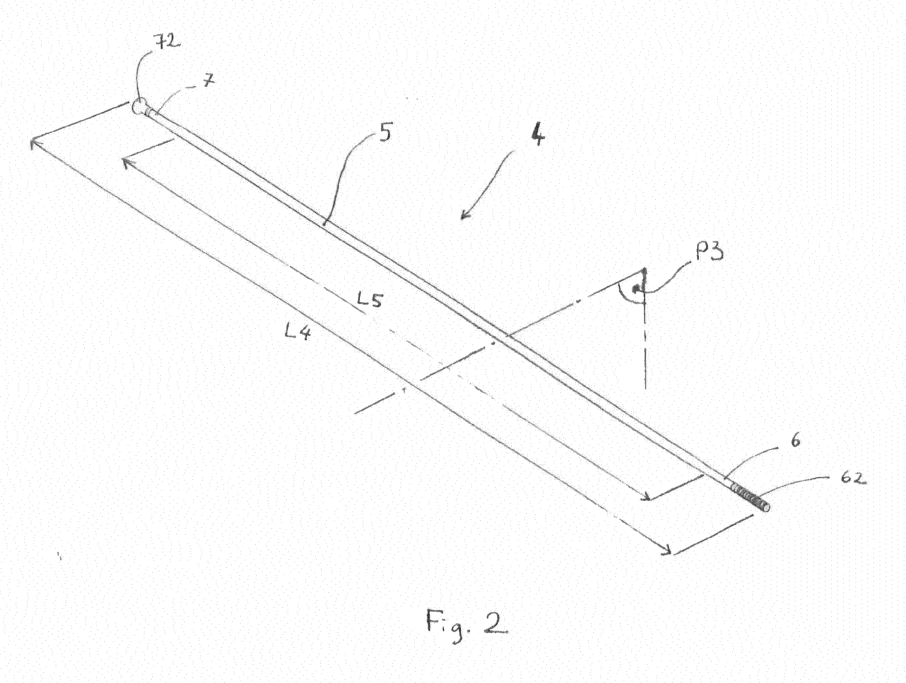

La figure 2 montre l'un des rayons 4 de la roue 1, faisant partie de la nappe 4a ou 4b. La suite de la description s'applique à n'importe quel rayon 4 de la roue 1 ou plus généralement aux roues de tout type de cycle.

Le rayon 4 est fabriqué à partir d'un matériau métallique, par exemple de l'acier inoxydable. Le rayon pourrait également être fabriqué en titane. La densité du matériau métallique est supérieure à 4, de préférence supérieure à 7.

Le module d'Young du matériau métallique est supérieur à 100 GPa. Par exemple, pour un alliage de titane, le module d'Young est de l'ordre de 105 GPa, pour un acier au carbone de l'ordre de 205 GPa et pour un acier inoxydable de l'ordre de 190 GPa.

La résistance à la traction Rm du matériau métallique est supérieure à 800 MPa. Par exemple, pour un alliage de titane, la résistance à la traction Rm est de l'ordre de 900 MPa et pour un acier de l'ordre de 1000 à 1200 MPa.

Le rayon 4 comprend une partie longitudinale centrale 5 et deux embouts 6 et 7.

L'extrémité libre du premier embout 6 comporte un filetage 62 destiné à être vissé dans un trou taraudé ménagé dans le moyeu de la roue. L'extrémité libre du deuxième embout 7 est pourvue d'une tête 72, destinée à être assemblée à la jante 3. Toutefois, l'invention ne se limite pas à ce type d'embouts et d'autres géométries peuvent être envisagées pour les extrémités du rayon 4, du moment que ces géométries sont conçues pour assurer la fixation du rayon 4 à la jante et au moyeu d'une roue de cycle.

On appelle section transversale du rayon 4 une section selon un plan perpendiculaire à la direction longitudinale du rayon 4, tel que le plan P3.

La partie centrale 5 qui constitue la part majoritaire du rayon est celle qui, on le verra plus loin, comprend les caractéristiques majeures de l'invention. En effet, c'est cette partie qui présente le meilleur compromis légèreté / aérodynamisme / résistance.

La longueur L5 de la partie centrale 5 du rayon 4 est supérieure ou égale à 60% de la longueur totale L4 du rayon 4. De préférence, la longueur L5 de la partie centrale pourra atteindre 70% ou plus de la longueur totale L4 du rayon.

Le rayon 4 est monolithique, c'est-à-dire qu'il est en une seule pièce, et qu'il n'a pas été fabriqué par assemblage de plusieurs éléments. Ceci évite de créer des zones de concentration de contraintes au niveau des jonctions entre des éléments assemblés, ce qui réduit les risques de rupture. En effet, les rayons qui sont par exemple fabriqués en soudant des embouts sur une partie centrale de section plus petite ont tendance à se casser au niveau des soudures.

En variante, des embouts 6 et 7 séparés sont assemblés à la partie centrale 5 du rayon 4.

La section transversale S de la partie centrale 5 est de forme allongée et a globalement la forme d'une ellipse s'étendant en longueur de part et d'autre d'un premier plan P1, qui est un plan médian longitudinal de la partie centrale 5, entre un bord de fuite 51 et un bord d'attaque 52 de forme effilée. Le plan P1 coupe la section transversale S et sa trace dans la section transversale S est un segment de droite. Le plan P1 est équidistant des faces latérales 53 et 54 et constitue un plan de symétrie du rayon. Ceci n'est pas une limitation de l'invention car une variante de réalisation consiste en un rayon qui ne dispose pas de symétrie selon un plan longitudinal.

Soit P2, un deuxième plan qui est un autre plan médian longitudinal de la partie centrale 5. Le plan P2 est perpendiculaire au plan P1 et coupe la section transversale. Sa trace dans la section transversale S est un segment de droite correspondant à la largeur maximale de la section S. Le plan P2 est équidistant du bord de fuite 51 et du bord d'attaque 52. Cette dernière caractéristique n'est pas, non plus, une limitation de l'invention dans la mesure où des variantes dans lesquelles la largeur maximale de la section S ne se trouve pas à égale distance des bords de fuite et d'attaque.

On note N, un point de la section transversale S défini par l'intersection entre le bord de fuite 51 et la trace du plan longitudinal P1 dans la section transversale S. On note M, un point de la section transversale S défini par l'intersection entre le bord d'attaque 52 et la trace du plan transversal P2 dans la section transversale.

La partie centrale 5 comporte deux faces latérales 53 et 54 de forme convexe qui relient le bord de fuite 51 au bord d'attaque 52. On note C, un point de la section transversale S défini par l'intersection entre la première face latérale 53 et le plan P2. On note D, un point de la section transversale S défini par l'intersection entre la deuxième face latérale 54 et le plan longitudinal P2.

Le rayon de courbure des faces latérales 53 et 54 est supérieur au rayon de courbure des bords 51 et 52. Le rayon de courbure des faces latérales 53 et 54 peut être sensiblement constant le long de ces flancs. Mais il peut également varier. De préférence, les variations du rayon de courbure le long des faces latérales ne doivent pas être trop importantes. Des variations trop brusques du rayon de courbure des faces latérales auraient pour conséquence que ces faces latérales deviendraient une succession de facettes distinctes et juxtaposées. Une telle configuration pourrait se révéler désavantageuse pour l'aérodynamisme.

Soit A, la longueur maximale de la section transversale S, mesurée dans le plan longitudinal P1 entre le bord de fuite 51 et le bord d'attaque 52, plus précisément entre les points M et N. Soit B, la largeur maximale de la section transversale S, mesurée dans le plan transversal P2 entre les faces latérales 53 et 54, plus précisément entre les points C et D. La largeur maximale B est inférieure à 1.5 mm, de préférence inférieure à 1.2 mm. De préférence encore, la largeur maximale B est inférieure à 1 mm. La largeur de la partie centrale 5 diminue de part et d'autre du plan transversal P2, en se rapprochant des bords 51 et 52.

La section transversale S est de forme allongée, c'est-à-dire que la longueur A est strictement supérieure à la largeur B. De préférence, un rapport ayant, comme dénominateur, la largeur B et, comme numérateur, la longueur A, est supérieur ou égal à 3, de préférence supérieur ou égal à 4.

Le caractère allongé de la section transversale est un gage pour un meilleur aérodynamisme du rayon. De plus, les bords d'attaque et de fuite se caractérisent dans le cadre de l'invention par une finesse inexistante jusqu'à présent dans l'art antérieur. On peut notamment caractériser cette finesse par le rapport existant entre l'aire effective de la section transversale de la partie centrale et le produit de la longueur A par la largeur B.

En effet, pour une longueur et une largeur données (A et B), l'aire de la section transversale S représente un pourcentage compris entre 50% et 100% du produit de la longueur A par la largeur B. Une aire de la section transversale égale à 100% du produit A x B correspondrait à une section transversale de type rectangle, tandis qu'un pourcentage de 50% du produit A x B correspondrait à une section transversale de type losange. Ces deux extrêmes sont exclus du cadre de l'invention dans la mesure où ils ne constituent pas des profils aérodynamiques du fait de la présence de facettes. Les rayons de l'art antérieur présentent typiquement une aire de section transversale supérieure à 85% du produit A x B. Dans le rayon conforme à l'invention, l'aire de la section transversale de la partie centrale représente 78% ou moins du produit A x B, de préférence 75% ou moins.

Etant donné que la largeur maximale du rayon de l'invention est inférieure à 1,5 mm, on peut également caractériser la finesse des bords de fuite ou d'attaque par la position d'une largeur de 0,5 mm le long de la longueur de la section transversale.

On note L1, une première largeur intermédiaire de la section transversale S, mesurée parallèlement au plan transversal P2, dans un premier plan intermédiaire P4. La première largeur intermédiaire L1 est égale à 0.50 mm. Le premier plan intermédiaire P4 est parallèle au plan transversal P2 et perpendiculaire au plan longitudinal P1, et coupe la section transversale S.

On note D1, une première distance entre le bord de fuite 51 et le premier plan intermédiaire P4, mesurée. La première distance D1 est mesurée dans la section transversale S, le long de la trace du plan longitudinal P1 sur la section transversale S, entre le point N du bord de fuite 51 et un point K situé à l'intersection entre la trace du plan longitudinal P1 et la trace du premier plan intermédiaire P4 dans la section transversale S. La première distance D1 est supérieure ou égale à 7% de la longueur A de la section transversale S. Ainsi, le bord de fuite 51 a une forme effilée qui diminue la trainée de culot, ce qui est favorable à un bon aérodynamisme du rayon 4.

De la même manière, le bord d'attaque 52 est de forme effilée. On note L2, une deuxième largeur intermédiaire de la section transversale S, mesurée parallèlement au plan transversal P2, le long de la trace d'un deuxième plan intermédiaire P5 dans la section transversale S. La deuxième largeur intermédiaire L2 est égale à 0.50 mm. Les largeurs intermédiaires L4 et L5 sont donc égales. Le deuxième plan intermédiaire P5 est parallèle au plan transversal P2 et perpendiculaire au plan longitudinal P1, et il coupe la section transversale S.

On note D2, une deuxième distance entre le bord d'attaque 52 et le deuxième plan intermédiaire P5. La deuxième distance D2 est mesurée dans la section transversale S, le long de la trace du plan longitudinal P1 dans la section transversale S, entre le point M du bord d'attaque 52 et un point J situé à l'intersection entre les traces du plan longitudinal P1 et du deuxième plan intermédiaire P5 dans la section transversale S. La deuxième distance D2 est supérieure ou égale à 7% de la longueur A de la section transversale S. Ainsi, le bord d'attaque 52 a une forme effilée qui évite que l'air ne se décolle trop tôt du rayon 4, ce qui est favorable à un bon aérodynamisme du rayon 4.

De préférence, les distances D1 et D2 sont supérieures ou égales à 10% de la longueur A de la section transversale S.

Dans le mode de réalisation décrit, les distances D1 et D2 sont sensiblement égales et correspondent à un pourcentage d'environ 12% de la longueur A de la section transversale.

La forme effilée du bord d'attaque 52 et du bord de fuite 51 permet de réduire la trainée aérodynamique d'une roue avant équipée de plusieurs rayons similaires au rayon 4, par exemple à une valeur de 0.15 N à 50 km/h.

Les largeurs intermédiaires L1 et L2 sont mesurées respectivement dans le plan intermédiaire P4 ou P5 qui est situé du côté du bord de fuite 51 ou du bord d'attaque 52 par rapport au plan transversal P2. Ainsi, la première largeur intermédiaire L1 est mesurée dans le premier plan intermédiaire P4, qui est situé du côté du bord de fuite 51 par rapport au deuxième plan P2. La deuxième largeur intermédiaire L2 est mesurée dans le deuxième plan intermédiaire P5, qui est situé du côté du bord d'attaque 51 par rapport au deuxième plan P2.

Dans l'exemple représenté, la section transversale de la partie centrale 5 est symétrique à la fois par rapport aux plans P1 et P2. En variante, la section transversale peut être dissymétrique par rapport au plan P1 et/ou P2.

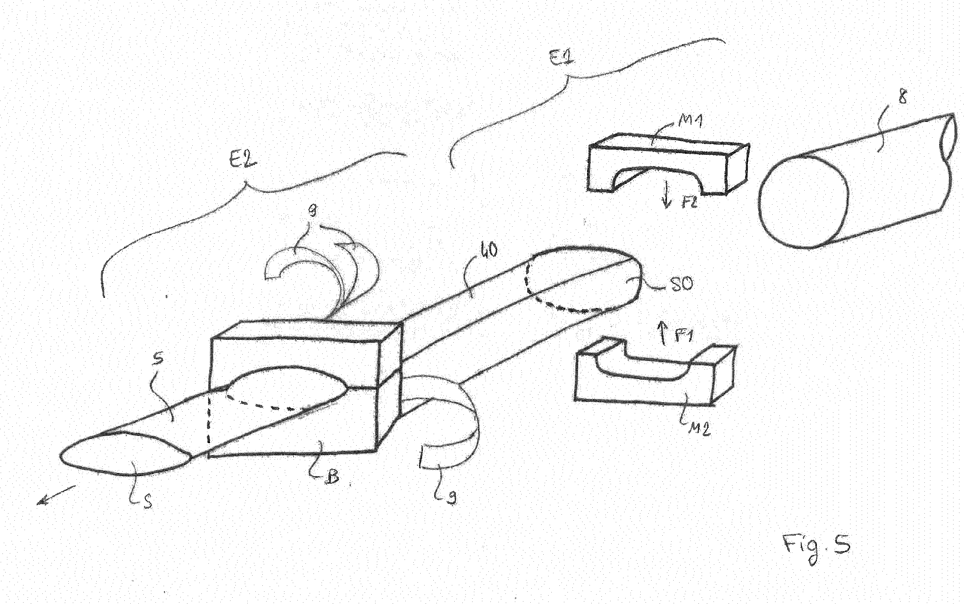

La suite de la description est faite en référence à la figure 5 et concerne un procédé de fabrication du rayon 4 à partir d'un fil métallique 8 pouvant être obtenu par exemple au moyen d'une filière. La longueur du fil 8 peut être plusieurs fois supérieure à la longueur du rayon 4, dans le but de fabriquer plusieurs rayons à partir d'un même fil. La section transversale du fil 8 peut être circulaire ou avoir une autre géométrie, par exemple rectangulaire.

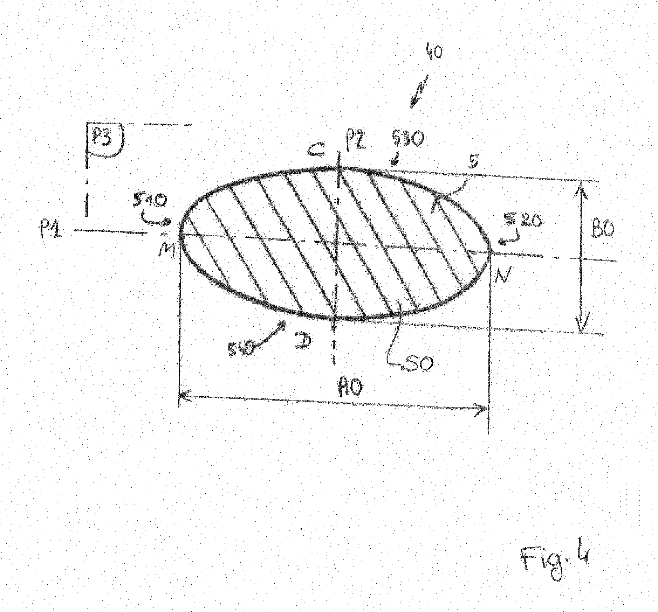

Dans une première étape E1 de mise en forme, une ébauche de rayon 40, représentée en section à la figure 4, est réalisée à partir du fil métallique 8 au moyen d'un procédé par déformation plastique. Par exemple, la première étape de mise en forme peut être réalisée par matriçage et/ou laminage. Dans l'exemple de la figure 5, il s'agit du matriçage. Deux demi-matrices M1 et M2 portent en creux la forme de l'ébauche de rayon 40, et une poussée F1 est appliquée pour frapper les matrices M1 et M2 l'une contre l'autre.

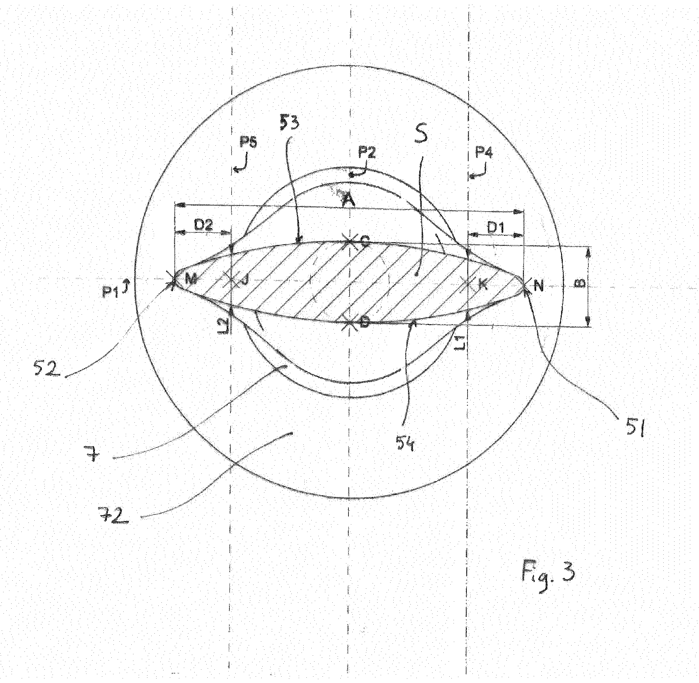

Au terme de la première étape de mise en forme E1, la section transversale provisoire S0 de la partie centrale 5 a une forme globalement elliptique, et ses dimensions A0 et B0 sont supérieures aux dimensions finales A et B visibles à la figure 3. Ainsi, le bord de fuite 510 et le bord d'attaque 520 provisoires, au terme de la première étape de mise en forme, sont moins effilés que les bords 51 et 52 du rayon 4 final. De même, le rayon de courbure des faces latérales 530 et 540 de l'ébauche de rayon 40 est plus faible que le rayon de courbure des faces latérales 53 et 54 du rayon 4 final. L'aire de la section transversale provisoire S0 est inférieure à celle de la section transversale S finale.

Dans une deuxième étape de mise en forme E2, postérieure à la première étape de mise en forme E1, la géométrie finale de la section transversale définitive S du rayon 4 est obtenue au moyen d'un procédé par enlèvement de matière, par exemple par brochage externe. Pour ce faire, on utilise une broche B qui est creuse et entoure le rayon 4. Le brochage consiste en un passage en translation du rayon 4 contre un outil fixe, en l'espèce la broche B. Il en résulte la formation de copaux 9.

La section transversale S de la partie centrale 5 comporte une zone circulaire Z, centrée sur l'intersection entre la trace des plans P1 et P2, dont les dimensions sont suffisantes pour permettre le passage des embouts 6 et 7 du rayon 4. Ceci permet de faire passer les rayons 4 en continu dans la broche lors de la deuxième étape de mise en forme. Il est ainsi possible de réaliser le brochage en continu, à une vitesse d'environ 100 m/min.

En variante, la deuxième étape E2 peut être effectuée par un procédé de meulage ou de fraisage. Dans le cas du meulage, l'outil de mise en forme est tournant.

La deuxième étape de mise en forme E2 permet d'effiler les bords 51 et 52 du rayon 4, afin de les rendre plus pointus, c'est-à-dire effilés.

Au terme de la deuxième étape de mise en forme, la partie centrale 5 du rayon 4 a sa géométrie finale.

Dans un mode de réalisation alternatif d'un procédé de fabrication d'un rayon selon l'invention, l'obtention de la forme finale de la section est obtenue par une deuxième étape de déformation plastique.

Dans une étape de façonnage, les extrémités du rayon 1 sont façonnées pour obtenir la géométrie des embouts 6 et 7 du rayon 7, c'est-à-dire pour obtenir une géométrie qui permet la fixation des embouts 6 et 7 à la jante 3 et au moyeu 2 de la roue 1. L'étape de façonnage peut être effectuée par exemple par usinage ou par forgeage après les deux étapes de mise en forme E1 et E2.

Dans une étape de débitage qui peut avoir lieu avant ou après les étapes de mise en forme, le fil 8 est sectionné de manière à former plusieurs tronçons correspondant chacun à un rayon.

Dans le cas où la partie centrale 5 du rayon est de section constante, l'aire effective « a » de la section transversale S peut être simplement calculée à partir du poids « m » et de la longueur de la partie centrale ainsi que de la masse volumique « ρ » du matériau utilisé. En pratique, on découpe une portion de la partie centrale de longueur « L », par exemple 100 mm ou 150 mm. L'aire « a » est alors donnée par la formule :

$$a = m / (\rho \times L)$$

Dans l'exemple décrit, la géométrie de la section transversale S de la partie centrale 5 du rayon 4 est constante tout le long de la partie centrale 5, entre les embouts 6 et 7. La plus grande longueur A d'une section transversale S de la partie centrale a une valeur de 3,5 mm et sa plus grande largeur B, mesurée perpendiculairement à cette longueur A est de 0,86 mm. La masse « m » d'un tronçon de longueur 150 mm de la partie centrale 5 est de 2,587 g. Le rayon étant réalisé en acier, dont la masse volumique « ρ » est de 7,85 g/cm³, l'aire « a » de la section centrale est de 2,197 mm², ce qui correspond à 73 % de la valeur du produit de A par B, à savoir 3,01 mm².

Dans des variantes non représentées, la section transversale peut varier dans la longueur entre les embouts 6 et 7, tout en restant dans le cadre de l'invention, c'est-à-dire en présentant une aire inférieure à 78% du produit de la longueur de la section transversale par sa largeur.

L'invention ne se limite pas au seul mode de réalisation décrit mais vise à protéger toute construction couverte par les revendications.

## Revendications

1. Rayon (4) métallique pour roue de cycle (1), comprenant une partie centrale (5) située entre deux embouts de fixation (6, 7), une section transversale (S) de la partie centrale (5) ayant une forme sensiblement elliptique dont une longueur maximale (A), mesurée dans un premier plan (P1) entre un bord de fuite (51) et un bord d'attaque (52) du rayon (4), est strictement supérieure à une largeur maximale (B) de la section transversale (S) de la partie centrale (5), mesurée dans un deuxième plan (P2) perpendiculaire au premier plan (P1), **caractérisé en ce que** ladite section transversale de la partie centrale présente une aire inférieure à 78% du produit de la longueur A par la largeur B.

2. Rayon (4) selon la revendication 1, **caractérisé en ce qu'**une largeur intermédiaire (L1, L2) de la section transversale (S) de la partie centrale (5), mesurée parallèlement au deuxième plan (P2) dans un plan intermédiaire (P4, P5) parallèle au deuxième plan (P2) et situé du côté du bord de fuite (51) ou du bord d'attaque (52) par rapport au deuxième plan (P2), est égale à 0.50 mm et **en ce qu'**une distance (D1, D2) mesurée respectivement entre le bord de fuite (51) ou le bord de fuite (52), et le plan intermédiaire (P4, P5) est supérieure ou égale à 7% de la longueur maximale (A) de la section transversale (S).

3. Rayon (4) selon la revendication 1, **caractérisé en ce que** la distance (D1, D2) est supérieure ou égale à 10 % de la longueur maximale (A) de la section transversale (S).

4. Rayon (4) selon l'une des revendications précédentes, **caractérisé en ce que** la largeur maximale (B) de la section transversale de la partie centrale (5) du rayon (4) est inférieure à 1.5 mm, de préférence inférieure à 1.2 mm, de préférence encore inférieure à 1 mm.

5. Rayon (4) selon l'une des revendications précédentes, **caractérisé en ce qu'**un un rapport ayant, comme dénominateur, la largeur maximale (B) et, comme numérateur, la longueur maximale (A), est supérieur ou égal à 3, de préférence supérieur ou égal à 4.

6. Rayon (4) selon l'une des revendications précédentes, **caractérisé en ce que** le module d'Young du matériau métallique constituant le rayon (4) est supérieur à 100 GPa.

7. Rayon (4) selon l'une des revendications précédentes, **caractérisé en ce que** la résistance à la traction du matériau métallique constituant le rayon (4) est supérieure à 800 MPa.

8. Rayon (4) selon l'une des revendications précédentes, **caractérisé en ce que** la densité du matériau métallique constituant le rayon (4) est supérieure à 4, de préférence supérieure à 7.

9. Rayon (4) selon l'une des revendications précédentes, **caractérisé en ce que** la longueur (L5) de la partie centrale (5) est supérieure ou égale à 60% de la longueur totale (L4) du rayon.

**Patentansprüche**

1. Metallische Speiche (4) für ein Fahrrad (1), die Folgendes beinhaltet: einen Mittelteil (5), der zwischen zwei Befestigungsansätzen (6, 7) angeordnet ist, eine Querschnittsfläche (S) des Mittelteils (5), die eine im Wesentlichen elliptische Form aufweist, von der eine maximale Länge (A), die in einer ersten Ebene (P1) zwischen einer Hinterkante (51) und einer Vorderkante (52) der Speiche (4) gemessen wird, in jedem Fall größer als eine maximale Breite (B) der Querschnittsfläche (S) des Mittelteils (5), die in einer zweiten Ebene (P2) senkrecht zur ersten Ebene (P1) gemessen wird, ist, **dadurch gekennzeichnet, dass** die Querschnittsfläche des Mittelteils einen Flächeninhalt aufweist, der kleiner als 78 % des Produkts aus der Länge A und der Breite B ist.

2. Speiche (4) nach Anspruch 1, **dadurch gekennzeichnet, dass** eine Zwischenbreite (L1, L2) der Querschnittsfläche (S) des Mittelteils (5), gemessen parallel zur zweiten Ebene (P2) in einer Zwischenebene (P4, P5), die parallel zur zweiten Ebene (P2) und mit Bezug auf die zweite Ebene (P2) auf der Seite der Hinterkante (51) bzw. der Vorderkante (52) angeordnet ist, gleich 0,50 mm ist und dass ein Abstand (D1, D2), der jeweils zwischen der Hinterkante (51) bzw. der Vorderkante (52) und der Zwischenebene (P4, P5) gemessen wird, größer oder gleich 7 % der maximalen Länge (A) der Querschnittsfläche (S) ist.

3. Speiche (4) nach Anspruch 1, **dadurch gekennzeichnet, dass** der Abstand (D1, D2) größer oder gleich 10 % der maximalen Länge (A) der Querschnittsfläche (S) ist.

4. Speiche (4) nach einem der vorhergehenden Ansprüche, **dadurch gekennzeichnet, dass** die maximale Breite (B) der Querschnittsfläche des Mittelteils (5) der Speiche (4) kleiner als 1,5 mm, bevorzugt kleiner als 1,2 mm, noch bevorzugter kleiner als 1 mm ist.

5. Speiche (4) nach einem der vorhergehenden Ansprüche, **dadurch gekennzeichnet, dass** ein Verhältnis, das als Nenner die maximale Breite (B) und als Zähler die maximale Länge (A) aufweist, größer oder gleich 3, bevorzugt größer oder gleich 4 ist.

6. Speiche (4) nach einem der vorhergehenden Ansprüche, **dadurch gekennzeichnet, dass** der Elastizitätsmodul des metallischen Werkstoffs, aus dem die Speiche (4) besteht, größer als 100 GPa ist.

7. Speiche (4) nach einem der vorhergehenden Ansprüche, **dadurch gekennzeichnet, dass** die Zugfestigkeit des metallischen Werkstoffs, aus dem die Speiche (4) besteht, größer als 800 MPa ist.

8. Speiche (4) nach einem der vorhergehenden Ansprüche, **dadurch gekennzeichnet, dass** die Dichte des metallischen Werkstoffs, aus dem die Speiche (4) besteht, größer als 4, bevorzugt größer als 7 ist.

9. Speiche (4) nach einem der vorhergehenden Ansprüche, **dadurch gekennzeichnet, dass** die Länge (L5) des Mittelteils (5) größer oder gleich 60 % der Gesamtlänge (L4) der Speiche ist.

**Claims**

1. Metallic spoke (4) for a cycle wheel (1), comprising a central part (5) located between two securing end fittings (6, 7), a cross section (S) of the central part (5) having a substantially elliptical form, of which a maximum length (A), measured in a first plane (P1) between a trailing edge (51) and a leading edge (52) of the spoke (4), is strictly greater than a maximum width (B) of the cross section (S) of the central part (5) measured in a second plane (P2) perpendicular to the first plane (P1), **characterized in that** said cross section of the central part has a face area less than 78% of the product of the length A times the width B.

2. Spoke (4) according to Claim 1, **characterized in that** an intermediate width (L1, L2) of the cross section (S) of the central part (5), measured parallel to the second plane (P2) in an intermediate plane (P4, P5) parallel to the second plane (P2) and located on the side of the trailing edge (51) or of the leading edge (52) relative to the second plane (P2), is equal to 0.50 mm, and that a distance (D1, D2) measured, respectively between the trailing edge (51) or the leading edge (52) and the intermediate plane (P4, P5) is greater than or equal to 7% of the maximum length (A) of the cross section (S).

3. Spoke (4) according to Claim 1, **characterized in that** the distance (D1, D2) is greater than or equal to 10% of the maximum length (A) of the cross section (S).

4. Spoke (4) according to one of the preceding claims, **characterized in that** the maximum width (B) of the cross section of the central part (5) of the spoke (4) is less than 1.5 mm, preferably less than 1.2 mm, more preferably less than 1 mm.

5. Spoke (4) according to one of the preceding claims, **characterized in that** a ratio having, as denominator, the maximum width (B) and, as numerator, the maximum length (A), is greater than or equal to 3, preferably greater than or equal to 4.

6. Spoke (4) according to one of the preceding claims, **characterized in that** the Young's modulus of the metallic material constituting the spoke (4) is greater than 100 GPa.

7. Spoke (4) according to one of the preceding claims, **characterized in that** the tensile strength of the metallic material constituting the spoke (4) is greater than 800 MPa.

8. Spoke (4) according to one of the preceding claims, **characterized in that** the density of the metallic material constituting the spoke (4) is greater than 4, preferably greater than 7.

9. Spoke (4) according to one of the preceding claims, **characterized in that** the length (L5) of the central part (5) is greater than or equal to 60% of the total length (L4) of the spoke.

Fig.1

Fig. 2

Fig. 3

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 29608495 U
- FR 2747749 B
- EP 1559583 A
- WO 03018331 A